# EUROPÄISCHE PATENTSCHRIFT

(11) **EP 0 892 472 B1**
(45) Veröffentlichungstag und Bekanntmachung des Hinweises auf die Patenterteilung: **24.07.2002**
(21) Anmeldenummer: 98110863.2
(22) Anmeldetag: 13.06.1998
(51) Int. Cl.: H01R 43/28, H01R 43/048, H02G 1/12, F16G 11/02

(54) **Verfahren und Vorrichtung zum Verbinden eines aus Filamenten bestehenden Stranges mit einer Bohrung oder Hülse**
Process and apparatus for joining a multi-filament cable to a bore or sleeve
Procédé et dispositif de raccord d'un câble à plusieurs torons dans un alésage ou avec un manchon

(30) Priorität: 18.07.1997 DE 19730927
(43) Veröffentlichungstag der Anmeldung: 20.01.1999
(73) Patentinhaber: Auto Kabel Managementgesellschaft mbH, 79688 Hausen i.W. (DE)
(72) Erfinder: Hentschel, Wolfgang, 79650 Schopfheim (DE)
(74) Vertreter: Patent- und Rechtsanwaltssozietät, Maucher, Börjes & Kollegen

(56) Entgegenhaltungen:
- DE-A- 4 013 834
- DE-A- 4 206 067
- DE-A- 4 303 122
- DE-A- 4 312 990
- DE-C- 4 221 828
- FR-A- 2 595 028
- US-A- 1 931 176
- US-A- 4 745 828

## Beschreibung

Die Erfindung betrifft ein Verfahren zum Verbinden des Endes eines aus einer Vielzahl oder aus einem Bündel von Filamenten, zum Beispiel aus Einzeldrähten oder Einzelfäden, bestehenden Stranges mit einem eine Bohrung oder dergleichen aufweisenden Halteteil oder mit einer Hülse, wobei die Filamente, Einzeldrähte oder Einzelfäden in die Bohrung oder Hülse eingeschoben und danach verpreßt werden.

Die Erfindung betrifft ferner eine Vorrichtung zum Verbinden eines aus mehreren Filamenten, insbesondere Drähten oder Fäden, bestehenden Stranges mit einem eine Bohrung aufweisenden Teil, einer Hülse oder dergleichen durch Einschieben des Endes des Stranges in diese Bohrung oder Hülse, mit einem Werkzeug zum Zusammendrücken mit wenigstens zwei quer zur Mittelachse des Stranges und gegensinnig zueinander bewegbaren, etwa gabelförmigen Backen, deren Innenkontur jeweils der Teilhüllkurve des von ihnen erfaßten Umfangsbereiches des Stranges entspricht.

Bisher ist es bekannt, einen Strang aus Einzelfäden, Einzeldrähten oder dergleichen Filamenten mit seinem Ende in eine Bohrung oder eine Hülse mehr oder weniger von Hand einzuschieben. Dabei besteht ein Problem darin, daß beispielsweise die einzelnen Drähte eines abisolierten Endes eines Kabels die Neigung haben, sich etwas aufzuspreizen, also den Gesamtdurchmesser zu vergrößern und beim Einschieben in die Öffnung der Bohrung oder Hülse zum Teil an dieser vorbeizugehen, so daß einzelne Drähte gestaucht, ausgebeult und geknickt werden. Dies bedeutet, daß nicht alle Drähte oder Filamente in die vorgesehene Öffnung gelangen. Die nicht in die Öffnung eingeführten Drähte müssen abgeschnitten werden, was einerseits einen zusätzlichen Arbeitsaufwand bedeutet und darüber hinaus fehlen dann solche einzelnen Drähte an dem elektroschen Querschnitt. Werden dabei diese nicht in die Öffnung eingeführten Drahtenden nicht sorgfältig entfernt, besteht sogar später Kurzschlußgefahr und/oder eine Verletzungsgefahr, wenn das Kabel montiert wird. Werden dabei zu viele der Drähte nicht erfaßt, sondern abgeschnitten, wird auch trotz der Verpressung der erforderliche oder gewünschte elektrische Übergangswiderstand nicht erreicht.

Ferner ist aus der US-A-1 931 176 bekannt, das aufgespreizte Ende eine Drahtseiles an seiner engsten Stelle, also mit Abstand zu dem Ende der Filamente zusammenzudrücken und dann ein zu diesem Zusammendrücken dienendes Werkzeug relativ zu dem aufgespreizten Ende in axialer Richtung zu der eigentlichen Stirnseite hin zu bewegen, so daß die Enden zusammengedrückt und gleichzeitig zumindest die äußeren Filamente einer erheblichen Reibkraft unterworfen werden. Es besteht dabei also die Gefahr, daß zumindest außenliegende Filamente beschädigt oder eventuell sogar abgerissen werden und dann am Ende des Stranges fehlen.

Dabei weist die Vorrichtung gemäß der US-A-1 931 176 zwei symmetrisch zueinander angeordnete, gabelförmige Backen an einem Drückwerkzeug auf, die sich in Schließstellung gegenseitig berühren sollen. Um die voneinander abgespreizten Enden der Filamente oder Drähte eines Drahtseiles zusammenzudrücken, werden die beiden Backen in einem Bereich eines Drahtseiles zusammengeführt, wo die Filamente nicht oder kaum auseinandergespreizt sind. Sodann wird dieses Drückwerkzeug relativ zu dem Ende des Drahtseiles bewegt, wodurch die Einzeldrähte auf dessen Innenquerschnitt zusammengeführt werden sollen. Dies bedeutet, daß die einzelnen Drähte eventuell nicht ausreichend zusammengedrückt werden und vor allem, daß sie in Axialrichtung zumindest an der Außenseite des Stranges einer erheblichen Belastung und Reibung unterworfen werden, was nicht nur zu einem Verschleiß des Werkzeuges, sondern auch zur Beschädigung einzelner Filamente führen kann. Dabei ist nicht ausgeschlossen, daß einzelne Filamente abgerissen werden, so daß der Strang nach einer solchen Behandlung unter Umständen nicht mehr vollständig ist. Vor allem bei elektrischen Kabeln wäre etwas derartiges völlig unbrauchbar.

Außderdem kann nicht ausgeschlossen werden, daß beim Zusammenführen der beiden Backen des Drückwerkzeuges einzelne Filamente nicht in den freibleibenden Querschnitt des Drückwerkzeuges, sondern zwischen die Enden der Backen gelangen und deren vollständiges Schließen verhindern.

Es besteht deshalb die Aufgabe, ein Verfahren der eingangs genannten Art zu schaffen, mit welchem möglichst alle Filamente, insbesondere Drähte eines elektrischen Kabels erfaßt und in eine vorgegebene Bohrung oder Öffnung oder Hülse eingeführt werden können. Ferner besteht die Aufgabe, eine Vorrichtung zur Durchführung dieses Verfahrens zu schaffen.
Zur Lösung dieser Aufgabe ist das eingangs genannte Verfahren dadurch gekennzeichnet, daß der Strang nahe dem Ende der freiliegenden, gegeneinander aufgespreizten Filamente, Einzeldrähte oder Fäden erfaßt wird, daß diese an dem gesamten Umfang des von ihnen gebildeten Stranges derart zusammengedrückt werden, **daß sie in die Öffnung, Bohrung oder Hülse hineinpassen,** daß danach der gegenüber der erfaßten Stelle zum freien Ende des Stranges hin vorhandene Überstand der Filamente in die Bohrung, Öffnung oder Hülse eingeführt, danach ein zum Zusammendrücken dienendes Druckwerkzeug, also der am Umfang ausgeübte Druck gelöst, und von der Bohrung, Öffnung oder Hülse in axialer Richtung wegversetzt erneut aufgebracht wird, so daß der Strang erneut mit Abstand zum Eintritt in die Öffnung am gesamten Umfang zusammengedrückt wird, und daß er sodann weiter in die Öffnung nachgeschoben wird und daß dies schrittweise wiederholt wird, bis der insgesamt einzuführende Längenbereich des Endes des Stranges mit der erwünschten Abmessung in die Bohrung, Öffnung oder Hülse eingeführt ist, und daß danach das Verpressen erfolgt.

Auf diese Weise werden also gegenüber dem Strang beziehungsweise seinem Querschnitt etwas aufgespreizte Filamente oder Drähte nahe dem Ende erfaßt und zusammengedrückt und dadurch auf einen Querschnitt gebracht, der möglichst etwas kleiner als der der Öffnung, Bohrung oder Hülse ist, in die das Strangende einzuführen ist. Die dabei zusammengedrückte und erfaßte Stelle läßt einen derart kurzen Überstand frei, daß dieser die gewünschte Außenabmessung hat und problemlos in die entsprechende Öffnung eingeführt werden kann wobei entweder der Strang oder das die Öffnung aufweisende Teil in axialer Richtung des Stranges bewegt werden können. Danach wird mit geringem Abstand zur Stirnseite der Hülse bzw. mit geringem Abstand zur Öffnung an diesem Strang derselbe Schritt wiederholt, so daß also auch ein noch nicht in die Öffnung eingeführter Teil des Stranges bei einem weiteren Nachschieben in die enge Öffnung nicht ausgebeult wird.

Es werden also schrittweise immer wieder kurze Strangstücke nach einem entsprechenden Zusammendrücken in die Öffnung eingeschoben und nachgeschoben, wobei die Länge des jeweils zwischen der Stelle der Zusammendrückung und dem Beginn der Öffnung befindlichen Teiles des Stranges so bemessen ist, daß die Eigenfestigkeit ausreicht, um ein Ausbeulen oder Ausknicken von Filamenten oder Drähten in diesem Zwischenbereich zu vermeiden, selbst wenn beim Einschieben an der Innenseite der Öffnung eine relativ große Reibkraft auftritt, weil der Gesamtquerschnitt des Stranges auch in zusammengedrückter Lage nahezu dem der Öffnung entspricht. Da jedoch der Strang immer wieder nahe der Öffnung gleichzeitig zusammengedrückt oder zusammengepreßt und dann vorgeschoben wird, kann die entstehende Reibkraft so klein wie möglich gehalten werden.

Das Verfahren sieht also vor, daß Schritt für Schritt das aus einzelnen Filamenten bestehende Ende eines Stranges in eine Öffnung eingeschoben wird, ohne daß die einzelnen Filamente dabei gestaucht und aus dem Strang abgespreizt oder ausgebeult werden. Somit entfällt auch die Notwendigkeit, nicht in die Öffnung eingeschobene Filamente oder Drähte zu entfernen. Ferner ist vor allem bei Kabelsträngen oder auch abisolierten Enden von solchen Kabeln eine gute Verbindung mit einer Hülse mit dem erwünschten elektrischen Widerstand möglich, so daß das Verfahren vor allem für diesen Anwendungsfall besonders vorteilhaft ist.

Zweckmäßig ist es dabei, wenn das Zusammendrücken des Stranges mit einem solchen Abstand zu seinem Ende erfolgt, daß der Überstand der einzelnen Filamente, Drähte oder Fäden kürzer als ihre Knicklänge ist, und wenn das danach erfolgende Zusammendrücken mit einem Abstand zu der Öffnung, Bohrung oder Hülse erfolgt, der wiederum kleiner als die Knicklänge der Filamente, Drähte oder Fäden ist. Daraus ergibt sich der vorstehend schon erwähnte Vorteil, daß beim Einschieben und beim Nachschieben trotz der dabei auftretenden Reibung die Filamente nicht oder nicht derartig ausgebeult werden, daß sie nicht mehr eingeführt werden können.

Eine weitere besonders vorteilhafte und zweckmäßige Ausgestaltung des Verfahrens kann darin bestehen, daß das in eine Öffnung, Bohrung oder Hülse einzuführende Ende des Stranges zunächst mit größerem Abstand von seinem freien Ende erfaßt, an seinem Umfang gedrückt und zu dem freien Ende hin derart ausgekämmt, daß die Filamente, Drähte oder Fäden in einer im wesentlichen axialen Richtung geordnet werden, wonach das Zusammendrücken nahe dem freien Ende und das anschließende schrittweise Einführen in die Öffnung, Bohrung oder Hülse erfolgt. Dies hat den Vorteil, daß auch ein stark ausgefranster oder aufgespreizter Strang an seinem Ende gut erfaßt werden kann und dabei keine einzelnen Filamente oder Drähte unberücksichtigt bleiben. Es kann vielmehr mit noch größerer Sicherheit ein möglichst kleiner Querschnitt des Stranges an seinem freien Ende gebildet werden, wobei zunächst relativ zueinander verschieden orientierte und eventuell schräg verlaufende Filamente, die sich eventuell sogar kreuzen könnten, geordnet werden können, was ebenfalls zu einer Verringerung des Gesamtquerschnittes beiträgt. Dies gilt vor allem für solche Kabel, deren Einzeldrähte als Litzen zumindest teilweise verdreht sind, so daß sie nach dem Abisolieren eine besonders starke Neigung zu einer etwas gewendelten Aufspreizung haben.

Das vorstehend geschilderte Verfahren läßt sich vor allem auch zum Verbinden eines Ummantelung aufweisenden Stranges, zum Beispiel eines isolierten Kabels oder eines Bowdenzuges, bestehend aus einer Vielzahl von Einzeldrähten und der Ummantelung, anwenden, indem zunächst die Ummantelung zumindest auf eine solche Länge entfernt oder das Kabel an dem zu verbindenden Ende auf eine solche Länge abisoliert wird, wie sie in eine Öffnung, Bohrung oder Hülse eingeführt werden soll, und daß danach das Zusammendrücken der Drahtenden und das Einführen in die Öffnung, Bohrung oder Hülse erfolgt.

Gerade solche isolierten Kabel neigen dazu, daß ihr abisoliertes Ende sich relativ stark aufspreizt, weil die einzelnen Drähte unter einer gewissen Spannung teilweise auch miteinander verdrillt sind und diese Spannung sich durch das Entfernen der Ummantelung lösen kann. Ein abisoliertes Ende eines Kabels hat deshalb häufig zunächst einen erheblich größeren Gesamtquerschnitt als das Kabel selbst oder erst recht als der Metallkern dieses Kabels. Durch die erfindungsgemäße Verfahrensweise, dieses Ende jeweils schrittweise am gesamten Umfang - zweckmäßigerweise mit einem entsprechenden Werkzeug - zusammenzudrücken und den geringen Überstand gegenüber der Druckstelle in die Öffnung einzuschieben, erlaubt es, auch solche stark aufgefächerte oder aufgespreizte Kabelenden in Öffnungen oder Hülsen einzustecken, ohne daß Einzeldrähte nicht erfaßt werden. Es kann durch das erfindungsgemäße Verfahren also vermieden werden, daß einzelne Drähte nicht erfaßt werden.

Die eingangs bereits erwähnte Vorrichtung zur Durchführung des erfindungsgemäßen Verfahrens weist ein Werkzeug zum Zusammendrücken - vorstehend schon kurz als "Druckwerkzeug" erwähnt - auf, welches dadurch gekennzeichnet ist, daß die Backen sich jeweils über die von ihnen erfaßte Kontur des Stranges und über dessen Mitte fortsetzen, wobei diese Fortsetzungen die Zinken der gabelförmigen Backen bilden und einen der Querschnittsdicke des Stranges entsprechenden Abstand haben, und wobei diese Backen in axialer Richtung des Stranges so zueinander versetzt sind, daß sie sich in Schließstellung mit den zinkenförmigen Fortsetzung überlappen.

Auf diese Weise kann also mit wenigstens zwei, gegebenenfalls auch drei, gegensinnig bewegbaren Teilen eine in der Regel runde Strangform an ihrem gesamten Umfang verpreßt werden, weil die von den Backen erfaßten Teilumfänge sich zu einem Gesamtumfang des Stranges ergänzen und dabei von den Berührstellen der Backen ausgehende Zinken dafür sorgen, daß keine Filamente beim Schließen dieses Querschnittes aus dem Druckbereich des Werkzeuges ausweichen können. Durch die erwähnten zinkenförmigen Fortsetzungen hat vielmehr jedes Teil-Werkzeug, vorstehend auch als "Backe" bezeichnet, eigentlich eine größere Innenkontur, als es dem erfaßten Teilbereich des Stranges entspricht, wobei diese Backen aber dann durch ihre gegensinnigen Bewegungen den Strang jeweils an der ihm entsprechenden Innenkontur der Gegenbacke andrücken. Somit kann schon mit zwei Backen, die einerseits eine etwa halbkreisförmige Innenkontur und sich daran anschließende Fortsetzungen haben, ein im Querschnitt kreisrunder Strang am gesamten Umfang zusammengepreßt werden. Darüber hinaus können auf diese Weise auch Stränge anderer Querschnittsformen zusammengepreßt werden, wenn die Innenkontur der Backen eine entsprechende Form hat.

Besonders günstig ist es, wenn die an den Backen über die Strangmitte überstehenden zinkenförmigen Fortsetzungen an ihren freien Enden jeweils eine Einlaufschräge haben, die insbesondere bis etwa auf die Höhe der Strangmitte verlaufen kann. Dies erleichtert das Erfassen eines Stranges in einem Bereich, der zunächst durch Aufspreizung der einzelnen Filamente einen zu großen Querschnittsraum einnimmt. Schon beim ersten Zusammenführen der Backen des Werkzeuges wird dann der Strang allmählich auf die gewünschte Querschnittsgröße zusammengedrückt, wonach dann noch eine letzte Zusammendrückung erfolgen kann, bis die Backen sich mit ihren Fortsetzungen vollständig überlappen und nur noch ihre eigentlichen, der Strangaußenkontur entsprechenden Innenkonturen an dem Strang anliegen.

Da sich die Backen überlappen, sind sie in axialer Richtung etwas gegeneinander versetzt. Damit dies nicht zu einer Richtungsänderung innerhalb des Stranges im Bereich der Zusammendrückung führt, ist es vorteilhaft, wenn das Drückwerkzeug mehr als zwei axial gegeneinander versetzte Backen aufweist und wenn diese in axialer Richtung hintereinander angeordneten Backen jeweils abwechselnd von unterschiedlichen Seiten her, insbesondere von einander entgegengesetzten Seiten her gegen den Strang oder ein Kabel und gegensinnig zueinander zustellbar und voneinander wegbewegbar sind. Beispielsweise können von beiden Seiten je drei Backen oder von einer Seite drei und von der anderen Seite zwei auf der Höhe der Zwischenräume der drei Backen angeordnete Backen vorgesehen und gegensinnig bewegbar sein und sich zu einem Druckwerkzeug mit insgesamt fünf oder sechs (bedarfsweise auch mehr) Backen ergänzen, die jeweils paarweise den Umfang eines Kabels oder Stranges erfassen und zusammendrücken können. Das Werkzeug besteht also in dieser bevorzugten Ausgestaltung aus einem Paket von jeweils paarweise einander gegenüberliegenden, axial aber etwas versetzten Backen, die insgesamt eine genügend große Länge des Stranges erfassen und zusammendrücken können, um Richtungsänderungen der Filamente oder Drähte im Bereich der Zusammendrückung weitestgehend auszuschließen.

Für das schrittweise Zusammendrücken oder ein erstes Zusammendrücken und Auskämmen kann das Drückwerkzeug mit seinen Backen insgesamt, insbesondere bei auseinanderbewegten Backen, in axialer Richtung verstellbar sein. Dies bedeutet, daß die Backenpakete also in axialer Richtung synchron verstellbar sein können und zwar in geöffneter Position, um eine neue Stelle an dem Strang zu erfassen und in geschlossener Position, um das Auskämmen und/oder Einschieben in eine Öffnung zu bewirken.

Es ist aber auch möglich, daß über die gesamte Länge des einzuführenden Strangendes Backen zum gegensinnigen Zusammendrücken in axialer Richtung verteilt und jeweils gegensinnig zueinander angeordnet sind und die einzelnen Backen jeweils im Fortschritt des Aufschiebens einer Öffnung oder Hülse oder eines eine Bohrung aufweisenden Teiles einzeln in ihre Offenstellung zurückziehbar sind, so daß jeweils ein Stück des Stranges zum weiteren Aufschieben freigegeben wird.

Es ist also entweder möglich, das Drück- oder Preßwerkzeug mit seinen Backen - von deren Öffnungs- und Schließbewegung abgesehen - in axialer Richtung zu bewegen oder aber die Backen nur in Öffnungsund Schließbewegung verstellbar zu gestalten und stattdessen das die Öffnung oder Bohrung aufweisende Teil oder eine Hülse jeweils weiter auf einen Strang aufzuschieben und gewissermaßen jeweils "im letzten Augenblick" die Backe oder Backen in Öffnungsposition zu bringen, die der Öffnung am nächsten sind. Während dabei eine Vorrichtung mit auch in axialer Richtung bewegbarem Werkzeug den Vorteil hat, für praktisch beliebige Längen von Strang-Endstücken eingesetzt werden zu können, muß die vorzugsweise nicht axial bewegbare Anordnung für unterschiedliche Längen jeweils mit unterschiedlichen Anzahlen solcher gegensinnig bewegbaren Backenpaare versehen sein.

Für eine effektive und auch bei relativ geringem Kraftaufwand wirkungsvolle Zusammendrückung ist es vorteilhaft, wenn die Backen in axialer Richtung dünn oder flach sind, so daß auch in axialer Richtung nur ganz geringe Abstände zwischen benachbarten Backen notwendig sind, und wenn sie insbesondere aus Blech oder Kunststoff gefertigt sind und in Richtung des Stranges eine Dicke oder Stärke von zum Beispiel etwa einem halben Millimeter bis drei Millimeter, vorzugsweise von etwa ein Millimeter bis zwei Millimeter haben. Dabei braucht der Abstand zwischen zwei einander in axialer Richtung benachbarten Backen dann auch kaum größer als die Dicke der jeweils gegenüberliegenden Backe zu sein. Entsprechend eng und fest können die Filamente eines Stranges erfaßt und zusammengedrückt werden.

Insgesamt ergibt sich ein Verfahren und eine Vorrichtung, mit der in mechanisierter oder automatisierter Form die häufig aufgespreizten Enden eines Stranges aus einzelnen Filamenten, insbesondere aus einzelnen Drähten zusammengedrückt werden können, so daß sie praktisch ohne Verluste an einzelnen Filamenten oder Drähten in eine enge Öffnung oder Bohrung eingeschoben werden können, was aufwendige Handarbeit mit den damit verbundenen Unzulänglichkeiten vermeidet.

Nachstehend ist ein Ausführungsbeispiel der Erfindung anhand der Zeichnung näher beschrieben. Es zeigt in stark schematisierter Darstellung:

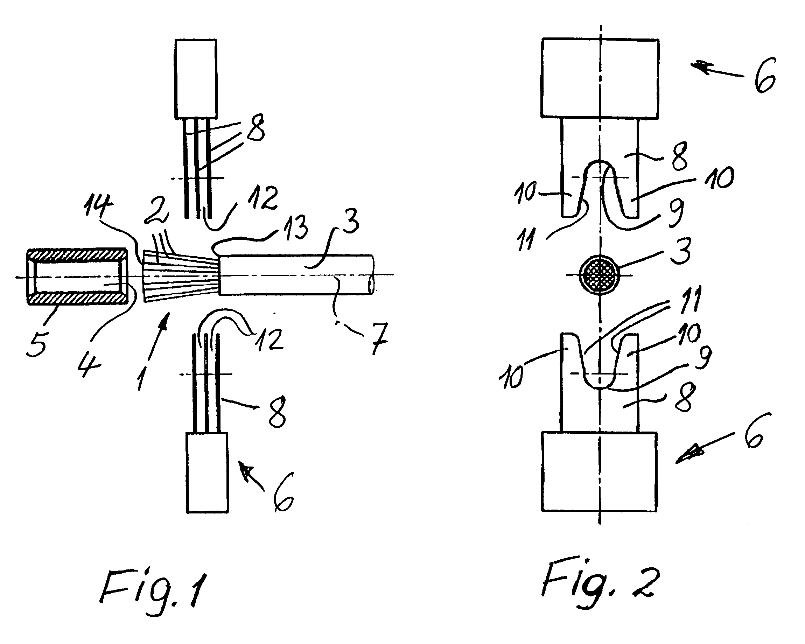

- Fig.1: einen Längsschnitt durch eine Hülse mit einer Öffnung in ihrem Inneren und eine Seitenansicht eines Stranges von einzelnen Drähten, nämlich eines Kabels, das an seinem Ende abisoliert ist, so daß die einzelnen Filamente oder Drähte etwas aufgespreizt haben, mit einer Seitenansicht eines schematisiert dargestellten Werkzeuges mit je drei Backen, die aufeinander zu und voneinander weg bewegbare sind und dabei in axialer Richtung so versetzt sind, daß die Backe des einen Werkzeuges jeweils auf die Lücke des anderen Werkzeuges trifft,
- Fig.2: eine Stirnansicht der Anordnung nach Fig.1 mit einem Strang und den Backen des Werkzeuges gem. Fig.1 in Offenstellung, woraus erkennbar ist, daß die Backen jeweils halbkreisförmige Innenkonturen und von dort aus sich erweiternde gabelförmige Fortsetzungen mit Einlaufschrägen zum Erfassen des aufgespreizten Kabelendes haben,

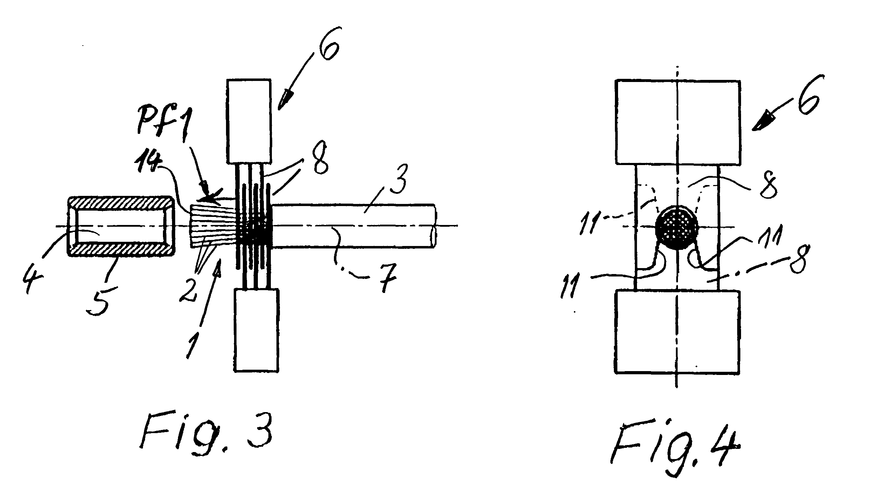

- Fig.3: eine der Fig.1 entsprechende Darstellung nach dem Schließen der Backen des Werkzeuges und dem Umfassen des Stranges mit Abstand zu seinem freien Ende,

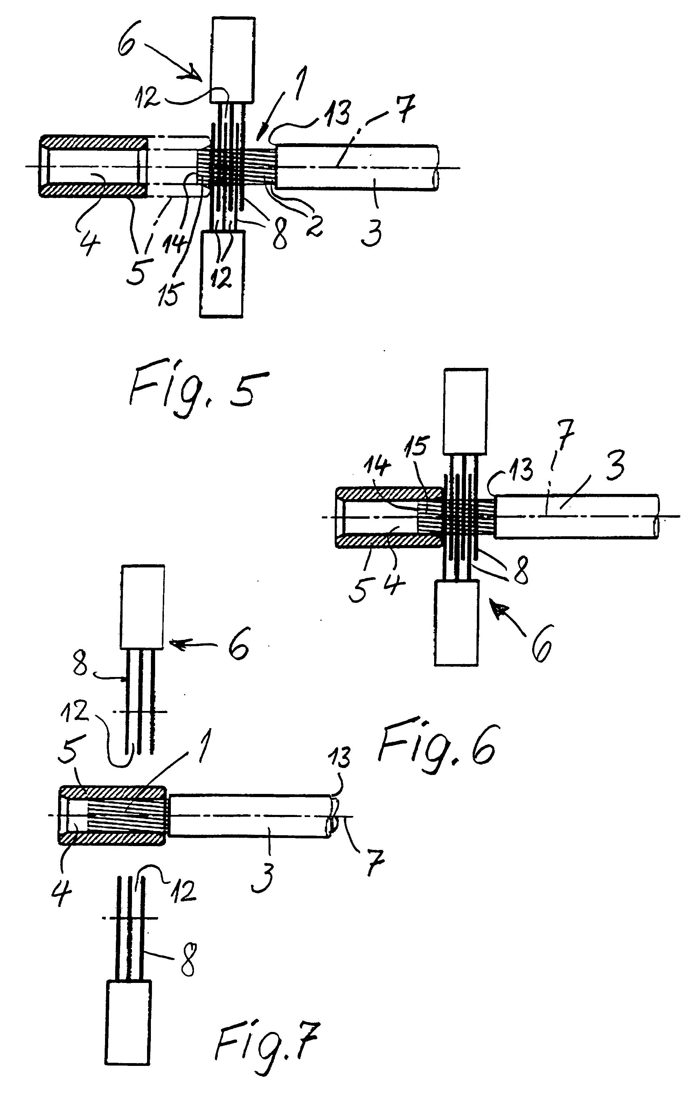

- Fig.4: eine Stirnansicht der Anordnung gem. Fig.3, aus der deutlich wird, daß die einander jeweils gegenüberliegenden Backen in Schließstellung den gesamten Umfang des Stranges erfassen und auf die gewünschte Querschnittsform und Außenkontur zusammendrücken,
- Fig.5: eine der Fig.4 entsprechende Darstellung, bei welcher eine Relativbewegung zwischen Werkzeugen und Strang oder Kabel in axialer Richtung derart durchgeführt ist, daß nur noch ein kurzer Überstand des freien Endes gegenüber dem Werkzeug vorhanden ist, der ohne Ausknickung oder Beulung in die Öffnung einer Hülse einschiebbar ist,
- Fig.6: eine der Fig.5 entsprechende Darstellung, bei welcher bereits ein Teil des Endes des Stranges in die Hülse eingeschoben ist und das Werkzeug zum Nachschieben erneut in Offenstellung gebracht werden muß, um mit etwas Abstand zu der Hülse einen weiteren Bereich des Kabels erfassen zu können, sowie
- Fig.7: eine den Figuren 1 , 3, 5 und 6 entsprechende Darstellung nach dem endgültigen Einschieben des abisolierten Kabelendes in die Hülse, wobei nun die Backen des Werkzeuges wieder in der in Fig.1 und 2 dargestellten Offenstellung sind, wobei
- alle Figuren: den Verfahrensablauf beim Verbinden eines Strangendes mit einer Hülse oder Öffnung zumindest schematisiert darstellen.

Zum Verbinden des Endes 1 eines aus einer Vielzahl von Filamenten 2, im Ausführungsbeispiel von Einzeldrähten, bestehenden Stranges 3 mit einem eine Öffnung 4 aufweisenden Halteteiles, im Ausführungsbeispiel einer Hülse 5, ist es erforderlich, die gemäß Fig.1 zunächst gespreizten Filamente 2 zusammenzudrücken, damit sie in die relativ enge Öffnung 4 hineinpassen. Der Strang 3 im Ausführungsbeispiel ist dabei ein Kabel, welches aus Einzeldrähten besteht, die sich beim Abisolieren des Endes 1 in aller Regel selbsttätig aufspreizen, weil sie meistens gegeneinander verwunden und miteinander verdrillt sind und unter einer gewissen Spannung stehen. Diese Filamente 2 sollen in die Öffnung 4 eingeschoben und dann mit der Hülse 5 verpreßt werden, um eine feste und einwandfreie elektrische Verbindung herzustellen.

In gleicher Weise können aber auch die Enden von Bowdenzügen mit entsprechenden Halteteilen verbunden werden.

In den Figuren ist dargestellt und angedeutet, daß eine Vorrichtung für dieses Verbinden des aufgespreizten Endes 2 mit der Hülse 5 ein Werkzeug 6 zum Zusammendrücken vorgesehen ist, das jeweils mehrfach zwei quer zur Mittelachse 7 des Stranges 3 und gegensinnig zueinander bewegbare, gemäß Fig.2 etwa gabelförmig gestaltete Backen 8 aufweist, die gegensinnig zueinander hin und voneinander weg bewegbar sind. In Fig.1 und 2 sind sie in voneinander wegbewegter Position, in den Figuren 3 bis 6 in zueinander hinbewegter und einen Druck ausübender Lage und in Fig.7 wieder in geöffneter Position dargestellt.

Diese Backen 8 haben jeweils eine Innenkontur, die der Teilhüllkurve des von ihnen erfaßten Umfangsbereiches des Stranges 3 entspricht. Im Ausführungsbeispiel ist dies jeweils etwa ein Halbkreis 9. Darüber hinaus setzen sich jedoch die Backen 8 jeweils über die von ihnen erfaßte Kontur und damit auch über diese Innenkontur 9 fort, so daß sie etwa gabelförmig gestaltet sind. Die gegenüber der Innenkontur 9 weiterverlaufenden Fortsetzungen 10 bilden dabei die Zinken dieser "Gabel" und haben zumindest an ihrer Ausgangsstelle an der Innenkontur 9 einen der Querschnittsdicke des Stranges 3 entsprechenden Abstand, der dabei also im Ausführungsbeispiel dem zweifachen Radius des Halbkreises 9 entspricht.

Dabei erkennt man in den Figuren 2 und 4, daß die an den Backen 8 über die Strangmitte überstehenden zinkenförmigen Fortsetzungen 10 an ihren freien Enden jeweils eine Einlaufschräge 11 haben, die im Ausführungsbeispiel bis auf die Höhe der Strangmitte beziehungsweise bis an die Innenkontur 9 heranreicht. Es leuchtet ein, daß auf diese Weise auch ein stark aufgefächertes Ende 1 eines Stranges 3 so erfaßt werden kann, daß keine einzelnen Filamente 2 oder Drähte aus dem sich schließenden Innenraum zwischen zwei zueinandergehörenden Backen 8 ausweichen kann, also alle einzelnen Filamente oder Drähte 2 mit Sicherheit erfaßt und umgriffen werden.

Dabei erkennt man gleichzeitig vor allem in Fig.3 und 6, daß diese Backen 8 in axialer Richtung des Stranges 3 so zueinander versetzt sind, daß sie sich in Schließstellung mit ihren zinkenförmigen Fortsetzungen 10 überlappen können.

Fig.4 macht deutlich, daß nach dem Zusammenbewegen der einander zunächst mit Abstand gegenüberliegenden Backen 8 durch deren Innenkonturen 9 ein geschlossener Umfang entsprechend dem Strangumfang gebildet wird, wobei aber die einzelnen Filamente 2 dann auf ein gewünschtes Maß zusammengedrückt sind. Beim Zusammenführen der Backen 8 geschieht dies aufgrund der Einlaufschrägen 11 allmählich und wird schließlich durch die sich ergänzenden Innenkonturen 9 der zusammenwirkenden Backen 8 vollendet.

Dabei erkennt man in den Figuren 1, 3, 5, 6 und 7, daß dieses Drückwerkzeug 6 mehr als zwei, nämlich von beiden Seiten her je drei axial gegeneinander versetzte Backen 8 aufweist und daß diese in axialer Richtung hintereinander angeordneten Backen 8 jeweils abwechselnd von unterschiedlichen Seiten her, nämlich voneinander entgegengesetzten Seiten her, gegen den Strang 3 oder ein Kabel und gegensinnig zueinander zustellbar und voneinander wegbewegbar sind, wobei der gegenseitige Versatz so gewählt ist, daß die Backen 8 der einen Seite in die Zwischenräume 12 zwischen den Backen 8 der anderen Seite bewegbar sind und in diese Zwischenräume passen. Dies wird vor allem anhand der Figuren 3, 5 und 6 deutlich.

Vor allem der Vergleich der Figuren 3, 5 und 6 zeigt außerdem, daß das Drückwerkzeug 6 mit seinen Backen 8 insgesamt in axialer Richtung relativ zu dem Kabel 3 und seinem Ende 1 verstellbar ist, wobei auch eine Verstellung in zusammengeführter Position möglich ist, solange noch nicht der volle Druck der Backen 8 gegeneinander aufgebracht wird. Dabei könnte diese Relativbewegung auch dadurch verwirklicht werden, daß das Werkzeug 6 nicht oder nur teilweise axial und der Strang 3 ganz oder teilweise bewegt werden.

Diese Anordnung ermöglicht folgende Verfahrensweise beim Verbinden des Endes 1 des Stranges 3 mit der Öffnung 4 der Hülse 5:

Zunächst wird bei einem Kabel 3 oder gegebenenfalls auch einem Bowdenzug das Ende 1 von der Ummantelung 13 befreit, also ein Kabel beispielsweise abisoliert. Dies führt dazu, daß die Filamente oder Einzeldrähte 2 sich an diesem Ende 1 gegenüber der verbleibenden Ummantelung 13 gegeneinander etwas aufspreizen und somit die in Fig.1 angedeutete Form bilden, bei der das abisolierte Ende 1 bei aufgelockerter gegenseitiger Anordnung der Drähte 2 einen größeren Querschnitt einnimmt, als es dem der Öffnung 4 entspricht.

Der Strang 3 und sein Ende 1 werden nun von dem Werkzeug 6 erfaßt und von den Backen 8 in der in Fig.3 und 4 dargestellten Weise auf eine Außenkontur gebracht, die etwa der der Öffnung 4 entspricht. Dabei ist in diesem Ausführungsbeispiel vorgesehen, daß das in die Öffnung 4 oder Hülse 5 einzuführende Ende 1 des Stranges 3 zunächst mit etwas größerem Abstand von seinem freien Ende oder seiner Stirnseite 14 erfaßt wird, an seinem Umfang gedrückt und zu seinem freien Ende oder seiner Stirnseite 14 hin derart ausgekämmt wird, daß die Filamente 2 oder Drähte in eine im wesentlichen axiale Richtung geordnet und vor allem nun auch nahe dieser Stirnseite 14 zumindest weitgehend auf die Kontur gebracht werden, die das Kabel 3 vor seinem Abisolieren hatte. Dieser Verfahrensschritt ist in Fig.3 durch den Pfeil Pf1 angedeutet, durch welchen dann das Drückwerkzeug 6 die in Fig.5 dargestellte Lage einnimmt.

Nunmehr setzt der wesentliche Teil des Verfahrens ein, indem nämlich der Strang 3 nahe dem Ende 14 der freiliegenden Filamente 2 oder Einzeldrähte erfaßt, diese an dem gesamten Umfang des von ihnen gebildeten Stranges 3 zusammengedrückt werden, so daß der Gesamtquerschnitt möglichst klein und vor allem gleich oder sogar etwas kleiner als der der Öffnung 4 wird.

Danach kann dann der gegenüber der erfaßten Stelle zum freien Ende 14 hin vorhandene kurze Überstand 15, der vor allem in Fig.5 deutlich erkennbar ist, in die Bohrung oder Öffnung 4 der Hülse 5 oder eines sonstigen Teiles eingeführt werden. Danach wird das Druckwerkzeug 6 dadurch gelöst, daß seine Backen 8 wieder in die in Fig.2 dargestellte Offenposition auseinanderbewegt werden. Nunmehr können sie nach einer axialen Relativbewegung erneut zusammengedrückt werden, wie dies in Fig.6 angedeutet ist, wobei Fig.6 aber schon einen weiteren Schritt, nämlich ein weiteres Einführen darstellt. Zunächst erfassen die Werkzeuge beim erneuten Zusammendrücken das Ende 1 des Stranges 3 wiederum mit einem Abstand zu der Hülse 5 und ihrer Öffnung 4, der etwa dem Überstand 15 entspricht, wobei aber dieser erste Überstand 15 schon in die Öffnung 4 eingeschoben wurde. Anschließend wird mit Hilfe der Axialbewegung dieser weitere Überstand in die Öffnung 4 hineinbewegt, wobei das Ende dieser Bewegung in Fig.6 dargestellt ist.

Dieser Vorgang kann mehrfach und schrittweise wiederholt werden, bis der einzuführende Längenbereich des Endes 1 des Stranges 3 gemäß Fig.7 in die Bohrung oder Öffnung 4 der Hülse 5 eingeführt ist, so daß danach dann deren Verpressen erfolgen kann.

Da zu Beginn des vorstehend geschilderten Verfahrens zunächst gemäß Fig.3 ein Zusammendrücken des zuletzt einzuschiebenden Bereiches des Endes 1 erfolgt ist, kann dieser letzte Teil auch in die Hülse 5 hineinbewegt werden, ohne daß er noch einmal von dem Werkzeug 6 erfaßt werden muß.

Es sei erwähnt, daß der zuerst geschilderte Schritt gemäß Fig.3 mit dem Erfassen mit Abstand vom stirnseitigen Ende 14 und das Auskämmen unter Umständen auch entfallen könnte, insbesondere wenn das Ende 1 des Stranges 3 schon relativ regelmäßig ist, so daß dann als erstes das Zusammendrücken des Endes 1 gemäß Fig.5 mit nur einem geringen Überstand 15 erfolgen kann, welcher Überstand 15 dann in der beschriebenen Weise in die Hülse 5 eingeschoben wird, wonach dies schrittweise so lange fortgesetzt wird, bis das einzuführende Ende 1 in der gewünschten Tiefe in der Hülse 5 steckt.

Sowohl der erwähnte Überstand 15 als auch der anschließend zwischen Hülse 5 und der nächstliegenden Backe 8 befindliche Abstand sind dabei so kurz gewählt, daß die dazwischen befindlichen Stücke der Filamente 2 oder Drähte kürzer als ihre Knicklänge sind, sich also bei dem Zusammenschieben nicht ausbeulen oder stauchen können. Versuche haben gezeigt, daß durch ein Erfassen des Endes 1 mit einem entsprechend kurzen Überstand 15 und einzelnen Vorschubschritten etwa mit der gleichen Abmessung ein abisoliertes Kabel problemlos in eine enge Hülse 5 eingeführt werden kann, ohne daß Einzeldrähte verformt werden und damit dem Gesamtverbund verlorengehen könnten.

Dabei erkennt man in den Figuren noch, daß die einzelnen Backen 8 jeweils sehr flach sind, so daß die an ihnen wirkende Kraft einen ausreichenden Druck erzeugt, um die Filamente 2 zu der gewünschten Gesamtkontur zusammenzudrücken, die in die Hülse 5 oder deren Öffnung 4 paßt. Dabei können diese Backen 8 zum Beispiel aus Blech, aber auch aus flachen Kunststoffstücken bestehen. Beispielsweise können sie in Richtung des Stranges 3 eine Dicke oder Stärke von zum Beispiel einem halben Millimeter bis drei Millimeter, unter Umständen auch noch etwas mehr, vorzugsweise von etwa ein Millimeter bis zwei Millimeter haben, woraus sich dann auch eine entsprechend geringe Abmessung der Abstände 12 und damit ein sicheres Erfassen der einzelnen Filamente 2 ergibt, ohne daß diese in dem Druckbereich Richtungsänderungen erfahren.

Der aus einer Vielzahl oder einem Bündel von einzelnen Filamenten 2, insbesondere Einzeldrähten, bestehender Strang 3 kann mit einem abisolierten oder freiliegenden Ende 1 in eine Öffnung 4 eingeführt werden, selbst wenn an diesem Ende 1 die Filamente 2 aufgespreizt sind, indem der Strang nahe dem freien Ende 14 der freiliegenden Filamente 2 erfaßt und die Filamente 2 an dem gesamten Umfang des Stranges zusammengepreßt und mit einer solchen Kontur versehen werden, die der der Aufnahmeöffnung 4 entspricht. Das Zusammendrücken erfolgt dabei so, daß gegenüber der Druckstelle noch ein Überstand zum freien Ende 14 hin verbleibt, der nun in dieser konturierten Form in die Öffnung 4 paßt und eingeschoben wird. Danach wird mit etwas Abstand zu der Öffnung 4 das Bündel der Filamente 2 erneut zusammengedrückt und um diesen vorerwähnten Abstand in die Öffnung 4 oder Hülse 5 eingeschoben. Dies wird schrittweise wiederholt, bis das gesamte Ende 1 des Stranges 3 in die Öffnung 4 eingeschoben ist, so daß danach die Hülse 5 verpreßt werden kann.

## Patentansprüche

1. Verfahren zum Verbinden des Endes (1) eines aus Filamenten (2), zum Beispiel aus Einzeldrähten oder Einzelfäden, bestehenden Stranges (3), insbesondere eines Kabels, mit einem eine Öffnung (4), Bohrung oder dergleichen aufweisenden Halteteil oder mit einer Hülse (5), wobei die Filamente (2), Einzeldrähte oder Einzelfäden in die Öffnung (4), Bohrung oder Hülse (5) eingeschoben und danach verpreßt werden, wobei der Strang (3) nahe dem Ende oder der Stirnseite (14) der freiliegenden, gegeneinander aufgespreizten Filamente (2), Einzeldrähte oder Fäden erfaßt wird, und diese an dem gesamten Umfang des von ihnen gebildeten Stranges (3) derart zusammengedrückt werden, daß sie in die Öffnung (4), Bohrung oder Hülse (5) hineinpassen, wobei danach der gegenüber der erfaßten Stelle zur Stirnseite (14) hin vorhandene Überstand (15) der Filamente (2) in die Öffnung (4), Bohrung oder Hülse (5) eingeführt, danach ein zum Zusammendrücken dienendes Druckwerkzeug (6) gelöst und von der Öffnung (4), Bohrung oder Hülse (5) in axialer Richtung durch eine gegenseitige Relativbewegung wegversetzt und dann erneut aufgebracht wird, so daß der Strang (3) mit Abstand zum Eintritt in die Öffnung (4) am gesamten Umfang zusammengedrückt wird, und wobei er sodann weiter in die Öffnung (4) geschoben wird und dies schrittweise wiederholt wird, bis der einzuführende Längenbereich des Endes (1) des Stranges (3) mit der erwünschten Abmessung in die Öffnung (4), Bohrung oder Hülse (5) eingeführt ist, und danach das Verpressen erfolgt.

2. Verfahren nach Anspruch 1, **dadurch gekennzeichnet, daß** das Zusammendrücken des Stranges (3) mit einem solchen Abstand zu seinem Ende (14) erfolgt, daß der Überstand (15) der einzelnen Filamente (2), Drähte oder Fäden kürzer als ihre Knicklänge ist, und daß das danach erfolgende Zusammendrücken in einem Abstand zu der Öffnung (4), Bohrung oder Hülse (5) erfolgt, der wiederum kleiner als die Knicklänge der Filamente (2), Drähte oder Fäden ist.

3. Verfahren nach Anspruch 1 oder 2, **dadurch gekennzeichnet, daß** das in eine Öffnung (4), Bohrung oder Hülse (5) einzuführende Ende (1) des Stranges (3) zunächst mit größerem Abstand von seinem freien Ende oder seiner Stirnseite (14) erfaßt, an seinem Umfang gedrückt und zu dem freien Ende (14) hin derart ausgekämmt wird, daß die Filamente (2), Drähte oder Fäden in eine im wesentlichen axiale Richtung geordnet werden, wonach das Zusammendrücken nahe dem freien Ende und das anschließende schrittweise Einführen in die Öffnung (4), Bohrung oder Hülse erfolgt.

4. Verfahren nach einem der Ansprüche 1 bis 3 zum Verbinden eines eine Ummantelung (13) aufweisenden Stranges (3), zum Beispiel eines isolierten Kabels oder eines Bowdenzuges, bestehend aus einer Vielzahl von Einzeldrähten und der Ummantelung, **dadurch gekennzeichnet, daß** die Ummantelung (13) zumindest auf eine solche Länge entfernt oder das Kabel an dem zu verbindenden Ende (1) auf eine solche Länge abisoliert wird, wie sie in eine Öffnung (4), Bohrung oder Hülse (5) eingeführt werden soll, und daß danach das Zusammendrücken der Drahtenden und das Einführen in die Öffnung (4), Bohrung oder Hülse erfolgen.

5. Vorrichtung zum Verbinden eines aus mehreren Filamenten (2), insbesondere Drähten oder Fäden, bestehenden Stranges (3) mit einem eine Öffnung (4) oder Bohrung aufweisenden Teil, einer Hülse (5) oder dergleichen durch Einschieben des Endes (1) des Stranges (3) in diese Öffnung (4) oder Hülse (5), zur Durchführung des Verfahrens nach einem der vorstehenden Ansprüche, mit einem Werkzeug (6) zum Zusammendrücken mit wenigstens zwei quer zur Mittelachse des Stranges (3) und gegensinnig zueinander bewegbaren, etwa gabelförmigen Backen (8), deren Innenkontur (9) jeweils der Teilhüllkurve des von ihnen erfaßten Umfangsbereiches des Stranges (3) entspricht, wobei, die Backen (8) sich jeweils über die von ihnen erfaßte Kontur des Stranges (3) und über dessen Mitte fortsetzen, wobei diese Fortsetzungen (10) die Zinken der gabelförmigen Backen (8) bilden und zumindest an ihrer Ausgangsstelle an der Innenkontur (9) einen der Querschnittsdicke des Stranges (3) entsprechenden Abstand haben, und wobei diese Backen (8) in axialer Richtung des Stranges (3) so zueinander versetzt sind, daß sie sich in Schließstellung mit den zinkenförmigen Fortsetzungen (10) überlappen.

6. Vorrichtung nach Anspruch 5, **dadurch gekennzeichnet, daß** die an den Backen (8) über die Strangmitte überstehenden zinkenförmigen Fortsetzungen (10) an ihren freien Enden jeweils eine Einlaufschräge (11) haben, die insbesondere bis etwa auf die Höhe der Strangmitte (7) verläuft.

7. Vorrichtung nach Anspruch 5 oder 6, **dadurch gekennzeichnet, daß** das Drückwerkzeug (6) mehr als zwei axial gegeneinander versetzte Backen (8) aufweist und daß diese in axialer Richtung hintereinander angeordneten Backen (8) jeweils abwechselnd von unterschiedlichen Seiten her, insbesondere von einander entgegengesetzten Seiten her gegen den Strang (3) oder ein Kabel und gegensinnig zueinander zustellbar und voneinander wegbewegbar sind.

8. Vorrichtung nach Anspruch 7, **dadurch gekennzeichnet, daß** von beiden Seiten je drei Backen (8) oder von einer Seite drei und von der anderen Seite zwei auf der Höhe der Zwischenräume (12) der drei Backen (8) angeordnete Backen (8) vorgesehen und gegensinnig bewegbar sind.

9. Vorrichtung nach einem der Ansprüche 1 bis 8, **dadurch gekennzeichnet, daß** das Drückwerkzeug (6) mit seinen Backen (8) insgesamt insbesondere bei auseinanderbewegten Backen in axialer Richtung verstellbar ist.

10. Vorrichtung nach einem der Ansprüche 1 bis 8, **dadurch gekennzeichnet, daß** über die gesamte Länge des einzuführenden Stranges Backen zum gegensinnigen Zusammendrücken in axialer Richtung verteilt angeordnet sind und die einzelnen Backen (8) jeweils im Fortschritt des Aufschiebens einer Öffnung (4) oder Hülse (5) oder eines eine Bohrung aufweisenden Teiles einzeln zurückziehbar sind, so daß jeweils ein Stück des Stranges (3) zum weiteren Aufschieben freigegeben ist.

11. Vorrichtung nach einem der Ansprüche 1 bis 10, **dadurch gekennzeichnet, daß** die Backen (8) in axialer Richtung dünn oder flach sind und insbesondere aus Blech und/oder Kunststoff bestehen und in Richtung des Stranges (3) eine Dicke oder Stärke von zum Beispiel etwa einem halben Millimeter bis etwa drei Millimeter, vorzugsweise von etwa ein Millimeter bis zwei Millimeter haben.

## Claims

1. A process for connecting the end (1) of a strand (3) especially a cable, of filaments (2), for example comprising individual wires or threads, with a holding part which has an opening (4), bore or suchlike or with a sleeve (5), wherein the filaments (2) individual wires or individual threads are pushed into the opening (4), bore or suchlike and are then compressed, wherein the strand (3) is gripped close to the end or the face side (14) of the free-lying filaments (2), individual wires or threads, which are splayed out against one another, and these are pressed together about the entire circumference of the strand (3) formed therefrom in such a way that they fit into the opening (4) bore or sleeve (5), wherein after the projection (15) of the filaments (2) towards the face side (14), with regard to the gripped point, is inserted into the opening (4), bore or sleeve (5) after which a pressure tool (6) which serves for compression is released and moved away from the opening (4), bore or sleeve (5) in the axial direction by means of a reciprocal relative movement and then is applied again so that the strand (3) is pressed together about its entire circumference into the opening (4) at a distance from the point of entry, and wherein it is then pushed further into the opening (4), this being repeated in steps until the length area of the end (1) of the strand (3) is inserted into the opening (4), bore or sleeve (5) with the desired dimensions, after which compression takes place.

2. A process according to claim 1, **characterised in that** the compression of the strand (3) takes place at such a distance from its end (14) that the projection (15) of the individual filaments (2), wires or threads is shorter than their buckling length, and that the compression which takes place thereafter takes place at a distance from the opening (4), bore or sleeve (5) which is again smaller than the buckling length of the filaments (2), wires or threads.

3. A process according to claim 1 or 2, **characterised in that** the end (1) of the strand (3) which is to be inserted into an opening (4), bore or sleeve (5) is initially gripped at a greater distance from its free end or its face side (14), is compressed about its circumference and is combed out towards its free end (14) in such a way that the filaments (2), wires or threads are arranged in a substantially axial direction, after which compression close to the free end and subsequent step-wise insertion into the opening (4), bore or sleeve (5) takes place.

4. A process according to one of claims 1 to 3 for connecting a sheathed strand (3), for example an insulated cable or a Bowden cable, comprising a multitude of individual wires and the sheathing, **characterised in that** the sheathing (13) is removed, or the cable has its insulation removed, from the end which is to be connected, from such a length as is to be inserted into an opening (4), bore or sleeve (5), and that following this, compression of the wire ends and insertion into the opening (4), bore or sleeve (5) take place.

5. An apparatus for connecting a strand (3) comprising a plurality of filaments (2), especially wires or threads, with a part having an opening (4) or bore, a sleeve (5) or similar by means of pushing the end (1) of the strand (3) into this opening (4) or sleeve (5) in order to carry out the process according to one of the preceding claims, with a compression tool (6) with at least two approximately fork-shaped jaws (8), which can be compressed transverse to the central axis of the strand (3) and are moveable in opposite directions to one another, the inner contour (9) of which corresponds, in each case, to the partial sleeve curve of the area of the strand (3) gripped by them, wherein the jaws (8) each continue over the contour of the strand (3) which they grip and over its centre, wherein these continuations (10) form the prongs of the fork-shaped jaws (8) and, at least at their exit point on the inner contour (9), have a spacing which corresponds to the cross-sectional thickness of the strand (3), and wherein these jaws (8) are offset from one another in the axial direction of the strand (3) so as to overlap with the prong-shaped continuations (10) in the closed position.

6. An apparatus according to claim 5, **characterised in that** the prong-shaped continuations (10) on the jaws (8) which project over the centre of the strand have a run-in slope (11) in each case on their free ends, which especially extends up to approximately the height of the strand centre (7).

7. An apparatus according to claim 5 or 6, **characterised in that** the pressure tool (6) has more than two jaws (8), offset axially against one another, and that these jaws (8), disposed behind one another in the axial direction, can be adjusted alternately from different sides, especially from opposing sides, against the strand (3) or a cable and can be adjustable in opposite directions to one another, and can be moved away from one another.

8. An apparatus according to claim 7, **characterised in that** from both sides, in each case three jaws (8) or three jaws from one side and two jaws from the other side, disposed at the height of the intermediate spaces (12) of the three jaws, are provided and can be moved in opposite directions.

9. An apparatus according to one of claims 1 to 8, **characterised in that** the pressure tool (6) with its jaws (8) as a whole can be adjusted, especially with moved-apart jaws, in the axial direction.

10. An apparatus according to one of claims 1 to 8, **characterised in that** jaws for opposed compression in the axial direction are distributed over the entire length of the strand which is to be inserted and the individual jaws (8) can be individually retracted in each case in the progress of pushing up a part which has an opening (4) or sleeve (5) or a bore so that in each case a piece of strand (3) is released to be pushed up further.

11. An apparatus according to one of claims 1 to 10, **characterised in that** the jaws (8) are thin or flat in the axial direction and especially comprise metal plate and/or plastic and, in the direction of the strand, have a thickness of, for example, approximately half a millimetre to approximately three millimetres, preferably approximately one millimetre to two millimetres.

## Revendications

1. Procédé pour le raccordement de l'extrémité (1) d'une corde (3), en particulier d'un câble, composée de filaments (2), par exemple de fibres individuelles ou de fils métalliques individuels, avec un élément de retenue présentant une ouverture (4), un alésage ou analogue, ou avec un manchon (5), les filaments (2), fils métalliques individuels ou fibres individuelles, étant glissés dans l'ouverture (4), alésage ou manchon (5), et ensuite comprimés, la corde (3) étant saisie à proximité de l'extrémité ou du côté frontal (14) des filaments (2), fils métalliques individuels ou fibres, libres et écartés les uns des autres, et ceux-ci étant comprimés sur l'ensemble de la périphérie de la corde (3) formée par eux, de telle manière qu'ils entrent dans l'ouverture (4), alésage ou manchon (5), le dépassement (15) des filaments (2) par rapport à la zone saisie vers le côté frontal (14) étant ensuite introduit dans l'ouverture (4), alésage ou manchon (5), un outil de compression (6) servant à la compression étant desserré et éloigné de l'ouverture (4), alésage ou manchon (5) dans la direction axiale par un mouvement relatif réciproque, puis replacé de telle manière que la corde (3) soit comprimée sur toute la périphérie à distance de l'entrée dans l'ouverture (4), et celle-ci pouvant alors être encore glissée dans l'ouverture (4) et ceci pouvant être répété pas à pas jusqu'à ce que la zone longitudinale à introduire de l'extrémité (1) de la corde (3) soit insérée avec la dimension souhaitée dans l'ouverture (4), alésage ou manchon (5), après quoi a lieu la compression.

2. Procédé selon la revendication 1, **caractérisé en ce que** la compression de la corde (3) a lieu à une distance de son extrémité (14) telle que le dépassement (15) des filaments individuels (2), fils métalliques ou fibres, est plus courte que sa longueur de flambage, et **en ce que** la compression réalisée ensuite a lieu à une distance de l'ouverture (4), alésage ou manchon (5), qui est encore une fois plus courte que la longueur de flambage des filaments (2), fils métalliques ou fibres.

3. Procédé selon la revendication 1 ou 2, **caractérisé en ce que** l'extrémité (1) de la corde (3) à introduire dans une ouverture (4), alésage ou manchon (5), est d'abord saisie à une distance relativement grande de son extrémité libre ou de son côté frontal (14), comprimée sur sa périphérie et peignée vers l'extrémité libre (14), de telle manière que les filaments (2), fils métalliques ou fibres, soient disposés dans une direction essentiellement axiale, après quoi la compression à proximité de l'extrémité libre et l'introduction progressive consécutive dans l'ouverture (4), alésage ou manchon, ont lieu.

4. Procédé selon l'une des revendications 1 à 3 pour raccorder une corde (3) présentant une gaine (13), par exemple un câble isolé ou un câble Bowden, composée d'un grand nombre de fils métalliques individuels et de la gaine, **caractérisé en ce que** la gaine (13) est enlevée ou le câble est dénudé à l'extrémité (1) à raccorder au moins sur la longueur qui doit être introduite dans une ouverture (4), alésage ou manchon (5), et **en ce qu'**ensuite la compression des extrémités de fils et l'introduction dans l'ouverture (4), alésage ou manchon, sont réalisées.

5. Dispositif pour le raccordement d'une corde (3) composée de plusieurs filaments (2), en particulier de fils métalliques ou fibres, avec un élément présentant une ouverture (4) ou alésage, un manchon (5) ou analogue par glissement de l'extrémité (1) de la corde (3) dans cette ouverture (4) ou ce manchon (5), pour la mise en oeuvre du procédé selon l'une des revendications précédentes, ayant un outil (6) pour comprimer avec au moins deux mâchoires (8) à peu près en forme de fourche, transversales à l'axe central de la corde (3) et mobiles dans le sens inverse l'une par rapport à l'autre, dont le contour intérieur (9) correspond à chaque fois à l'enveloppante partielle de la zone périphérique de la corde (3) saisie par celles-ci, chacune des mâchoires (8) se prolongeant au-delà du contour de la corde (3) saisi par elles et au-delà de son milieu, ces prolongements (10) formant les dents des mâchoires (8) en forme de fourche et ayant au moins à leur point de départ au niveau du contour intérieur (9) un écartement correspondant à l'épaisseur de section transversale de la corde (3), et ces mâchoires (8) étant décalées l'une par rapport à l'autre dans la direction axiale de la corde (3) de telle sorte qu'elles s'imbriquent en position de fermeture avec les prolongements (10) en forme de dents.

6. Dispositif selon la revendication 5, **caractérisé en ce que** les prolongements (10) en forme de dents dépassant au-delà du milieu de corde sur les mâchoires (8) ont à chacune de leurs extrémités libres un biseau d'introduction (11) qui, en particulier, va à peu près jusqu'à hauteur du milieu de corde (7).

7. Dispositif selon la revendication 5 ou 6, **caractérisé en ce que** l'outil de compression (6) présente plus de deux mâchoires (8) décalées axialement les unes par rapport aux autres et **en ce que** ces mâchoires (8) disposées les unes derrière les autres dans la direction axiale peuvent être déplacées chacune alternativement d'un côté différent, en particulier d'un côté opposé, contre la corde (3) ou un câble et dans le sens inverse les unes par rapport aux autres et peuvent être éloignées les unes des autres.

8. Dispositif selon la revendication 7, **caractérisé en ce qu'**il est prévu, mobiles dans le sens inverse, trois mâchoires (8) des deux côtés ou, d'un côté trois et de l'autre côté deux mâchoires (8) disposées à hauteur des espacements (12) des trois mâchoires 8.

9. Dispositif selon l'une des revendications 1 à 8, **caractérisé en ce que** l'outil de compression (6) avec ses mâchoires (8) peut être réglé dans son ensemble dans la direction axiale, en particulier lorsque les mâchoires sont éloignées les unes des autres.

10. Dispositif selon l'une des revendications 1 à 8, **caractérisé en ce que** sur toute la longueur de la corde à introduire des mâchoires sont réparties dans la direction axiale pour la compression dans le sens inverse et chacune des mâchoires (8) peut être retirée individuellement au cours de l'avancement de l'enfilement d'une ouverture (4) ou d'un manchon (5) ou d'un élément présentant un alésage, de telle sorte qu'à chaque fois un morceau de la corde (3) est libéré pour continuer l'enfilement.

11. Dispositif selon l'une des revendications 1 à 10, **caractérisé en ce que** les mâchoires (8) sont minces ou plates dans la direction axiale, sont en particulier en tôle et/ou plastique et ont dans la direction de la corde (3) une grosseur ou épaisseur comprise par exemple entre environ un demi-millimètre et environ 3 millimètres, de préférence entre environ un millimètre et deux millimètres.
